# EUROPEAN PATENT SPECIFICATION

(11) **EP 0 308 492 B1**
(45) Date of publication and mention of the grant of the patent: **08.09.1993**
(21) Application number: 88903629.9
(22) Date of filing: 29.03.1988
(51) Int. Cl.: G06K 15/12

(54) **PRINTER APPARATUS**
DRUCKGERÄT
APPAREIL D'IMPRESSION

(30) Priority: 01.04.1987 US 33550
(43) Date of publication of application: 29.03.1989
(73) Proprietor: EASTMAN KODAK COMPANY (a New Jersey corporation), Rochester, New York 14650 (US)
(72) Inventor: PHAM, Hieu, T., Webster, NY 14580 (US); ZEISE, Eric, K., Pittsford, NY 14534 (US); NG, Yee, S., Fairport, NY 14450 (US); TSCHANG, Pin, S., Rochester, NY 14617 (US); KIEFFER, Kenneth, D., Rochester, NY 14624 (US)
(74) Representative: Schmidt, Peter, Dipl.-Ing.
(86) International application number: US8800958
(87) International publication number: WO8807729

(56) References cited:
- WO-A-87/02162
- DE-A- 3 422 907
- GB-A- 2 104 266
- US-A- 4 571 602
- IEEE Transactions on Consumer Electronics, vol. CE-32, no. 1, February 1986, IEEE, (New York, US), J. Burkhart et al.: "A monolithically integrated 128 LED-driver and its application", pages 26-31, see figures 3,4; page 28, left-hand column, line 6 - page 29, left-hand column, line 19

## Description

### BACKGROUND OF THE INVENTION

The present invention relates to recording apparatus for recording images on a moving radiation sensitive member and, more particularly, to printer apparatus for use therewith.

In the prior art as exemplified by U.S. Patent No. 4,571,602 printer apparatus is described which comprises a multiplicity of individually addressable and energizable point-like radiation sources, such as LED's, arranged in rows for exposing points upon a photoreceptor during movement thereof relative to and in a direction normal to the rows. Driver circuits are provided for simultaneously energizing the radiation sources responsive to respective data bit input signals applied to the driver circuits during an information line period. The print or recording head includes a support upon which are mounted chips placed end to end and upon each of which are located a group of LED's. The driver circuits are incorporated in chips and located to each side of the linear array of LED chips. The driver circuits in this apparatus include a shift register for serially reading-in data-bit signals and for driving respective LED's in accordance with the data signals.

Associated with each driver chip is an input pad onto which a current-level control signal is applied. The signal determines the mean current that is produced by a driver into its corresponding LED's. Reference is made to mean current because, due to fabrication tolerances of drivers and LED's, the actual current through an LED may be up to e.g. 10% larger or smaller than the desired nominal value. In order to set the control signal, four resistors in series are provided between a line carrying a five volt DC voltage and the driver chip. By shorting out one or more of the four different resistors, 15 different possible combinations of current control signals can be made. The current control signal fixed for that driver chip is not fed to the LED's but is instead used to generate a larger actual current that passes through the LED's selected to be energized by the data signals.

A problem with the apparatus described in the aforementioned patent is that 15 levels of control provide an undesirable design limitation. A mean current to one group of LED's that is higher than that to an adjacent group of LED's in the same row will provide reproductions with varying patterns of lines. The eye is very sensitive in detecting low frequency pattern lines in reproductions. While differences in light output between adjacent LED's may not be significant to the eye, differences of mean light output between adjacent groups of LED's tend to degrade image quality, particularly in reproductions of pictorial information.

In a publication by J. Burkhart et al and entitled "A Monolithically Integrated 128 LED-Driver And Its Application, IEEE Transactions on Consumer Electronics, Vol. CE-32, No. 1, February 1986 an LED printhead is described having a driver chip for driving 128 LED's. The 128 LED's are supplied by an adjustable current source with multiple outputs. The magnitude of the LED current is determined by an external resistor and an adjustable current control voltage. The current established by this current source establishes a current in a current mirror master circuit which is also replicated in the 128 circuits for supplying current to the LED's. There is no indication in this publication as to the type of resistor used for this external resistor, nor is there indication in this publication that different values of this external resistor are provided. Where only a nominal external resistance value is chosen for all driver chips, balancing of LED output may have to be accomplished by other means such as providing resistors in each of the 128 LED driver circuits. This then creates additional problems of ensuring a good match in 128 resistors, each of which could be off a nominal value by several percent and thereby providing different currents to the LED's causing differences in light outputs between them. Such differences in light outputs can affect the quality of reproduction of images formed with light from LED's that are not uniformly light emitting to a precise degree.

A further disadvantage of the apparatus of the prior art is that of lacking the ability to provide for easy and preferably automatic maintenance of LED light output to correct for changes in light output resulting from aging or other changes to the print head.

A further disadvantage over the apparatus of the prior art, U.S. 4,571,602, is the offsetting of adjacent LED's into staggered rows and the requirement that circuitry be provided for illuminating the rows at staggered times.

It is, therefore, an object of the invention to provide an improved printer apparatus and print head for use therewith which overcomes the problems of the prior art.

### SUMMARY OF THE INVENTION

The improved printer apparatus of the invention is realized by a printer apparatus according to claim 1.

An other improved printer apparatus according to the present invention is also realized by a printer apparatus according to claim 7.

### BRIEF DESCRIPTION OF THE DRAWINGS

Fig. 1 is a schematic of a recording apparatus, including printer apparatus, made in accordance with the invention;
Fig. 2 is a block diagram of circuitry used in forming the printer apparatus of Fig. 1 in accordance with the invention;
Fig. 3 is a block diagram of a driver circuit for use in the printer apparatus of Fig. 2;
Fig. 4 is a schematic of a current driving circuit for the driver circuit of Fig. 3;
Fig. 5 is a graph illustrating a preferred range of parameters for operating the circuit of Fig. 4
Fig. 6a and 6b are schematics of alternate circuits for use with the apparatus of Fig. 1.
FIG. 7a and 7b are flowcharts for a program for operating the print apparatus in accordance with certain aspects of the invention.

### DESCRIPTION OF THE PREFERRED EMBODIMENTS

Apparatus of the preferred embodiments will be described in accordance with an electrophotographic recording medium. The invention, however, is not limited to apparatus for creating images on such a medium, as other media such as photographic film etc. may also be used with the invention.

Because electrophotographic reproduction apparatus are well known, the present description will be directed in particular to elements forming part of or cooperating more directly with the present invention. Recording apparatus not specifically shown or described herein are selectable from those known in the prior art.

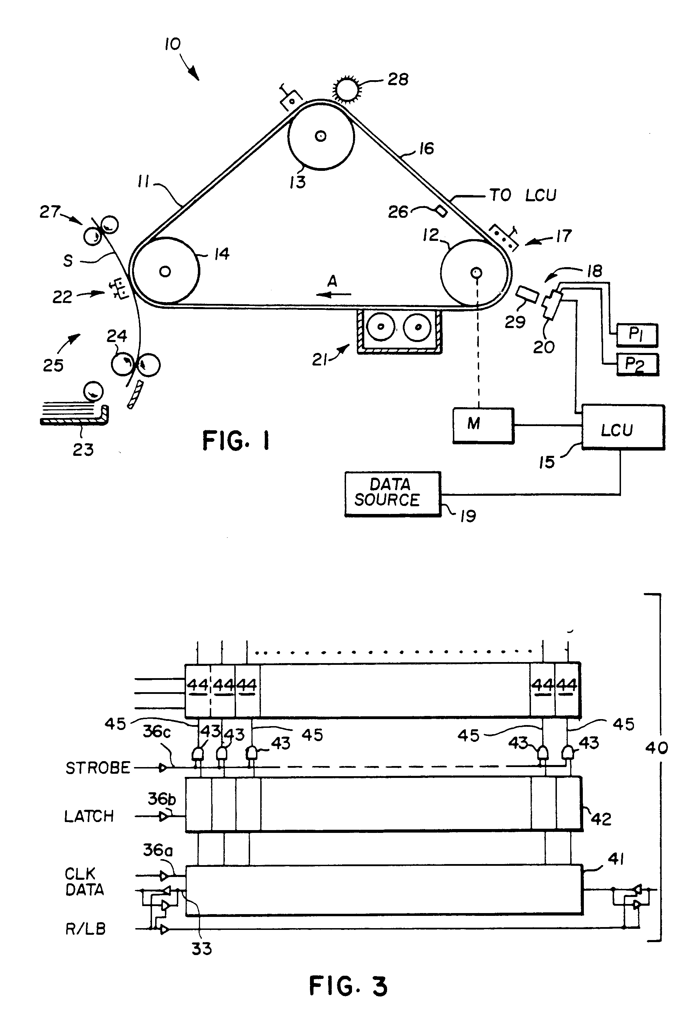

With reference now to FIG. 1, an electrophotographic reproduction apparatus 10 includes a radiation sensitive recording medium such as a photoconductive web 11 or other photosensitive or radiation sensitive medium that is trained about three transport rollers 12, 13 and 14, thereby forming an endless or continuous web. Roller 12 is coupled to a driver motor M in a conventional manner. Motor M is connected to a source of potential when a switch (not shown) is closed by a logic and control unit (LCU) 15. When the switch is closed, the roller 12 is driven by the motor M and moves the web 11 in a clockwise direction as indicated by arrow A. This movement causes successive image areas of the web 10 to sequentially pass a series of electrophotographic work stations of the reproduction apparatus.

For the purposes of the instant exposure, several work stations are shown along the web's path. These stations will be briefly described.

First, a charging station 17 is provided at which the photoconductive surface 16 of the web 11 is sensitized by applying to such surface a uniform electrostatic primary charge of a predetermined voltage. The output of the charger may be controlled by a grid connected to a programmable power supply (not shown). The supply is in turn controlled by the LCU 15 to adjust the voltage level Vo applied onto the surface 16 by the charger 17.

At an exposure station 18 an electrostatic image is formed by modulating the primary charge on an image area of the surface 16 with selective energization of point-like radiation sources in accordance with signals provided by a data source 19. The point-like radiation sources are supported in a printer apparatus (print head) 20 to be described in more detail below.

A development station 21 includes developer which may consist of iron carrier particles and electroscopic toner particles with an electrostatic charge opposite to that of the latent electrostatic image. Developer is brushed over the photoconductive surface 16 of the web 11 and toner particles adhere to the latent electrostatic image to form a visible toner particle, transferable image. The development station may be of the magnetic brush type with one or two rollers. Alternatively, the toner particles may have a charge of the same polarity as that of the latent electrostatic image and develop the image in accordance with known reversal development techniques.

The apparatus 10 also includes a transfer station 25 shown with a corona charger 22 at which the toner image on web 11 is transferred to a copy sheet S; and a cleaning station 28, at which the photoconductive surface 16 of the web 11 is cleaned of any residual toner particles remaining after the toner images have been transferred. After the transfer of the unfixed toner images to a copy sheet S, such sheet is transported to a heated pressure roller fuser 27 where the image is fixed to the copy sheet S.

As shown in FIG. 1, a copy sheet S is fed from a supply 23 to driver rollers 24, which then urge the sheet to move forward onto the web 11 in alignment with a toner image at the transfer station 25.

To coordinate operation of the various work stations 17, 18, 21, and 25 with movement of the image areas on the web 11 past these stations, the web has a plurality of indicia such as perforations along one of its edges. These perforations generally are spaced equidistantly along the edge of the web 11. At a fixed location along the path of web movement, there is provided suitable means 26 for sensing web perforations. This sensing produces input signals into the LCU 15 which has a digital computer, preferably a microprocessor. The microprocessor has a stored program responsive to the input signals for sequentially actuating, then de-actuating the work stations as well as for controlling the operation of many other machine functions. Additional encoding means may be provided as known in the art for providing more precise timing signals for control of the various functions of the apparatus 10.

Programming of a number of commercially available microprocessors is a conventional skill well understood in the art. This disclosure is written to enable a programmer having ordinary skill in the art to produce an appropriate control program for the one or more microprocessors used in this apparatus. The particular details of any such program would, of course, depend on the architecture of the designated microprocessor.

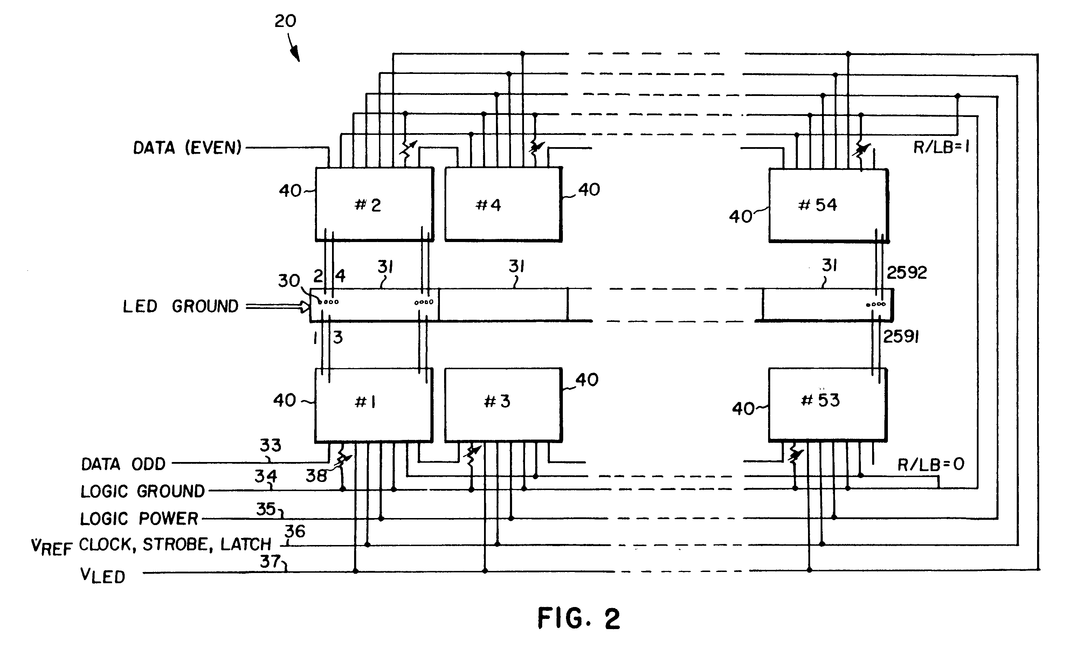

With reference to FIGS. 1 and 2, the printer apparatus (print head) 20, as noted, is provided with a multiplicity of energizable point-like radiation sources 30, preferably light-emitting diodes (LED's). Optical means 29 may be provided for focusing light from each of the LED's onto the photoconductive surface. The optical means preferably comprises an array of optical fibers such as sold under the name Selfoc, a trademark for a gradient index lens array sold by Nippon Sheet Glass, Limited. Due to the focusing power of the optical means 29, a row of emitters will be imaged on a respective transverse line on the recording medium.

With reference to FIG. 2, the print head 20 comprises a suitable support with a series of LED chips 31 mounted thereon. Each of the chips 31 includes in this example 96 LED's arranged in a single row. Chips 31 are also arranged end-to-end in a row and where twenty-seven LED chips are so arranged, the print head will extend across the width of the web 11 and include 2592 LED's arranged in a single row. To each side of this row of LED's there are provided twenty-seven identical driver chips 40. Each of these driver chips include circuitry for addressing the logic associated with each of 48 LED's to control whether or not the LED should be energized as well as to determine the level of current to each of the LED's controlled by that driver chip 40. Two driver chips 40 are thus associated with each chip of 96 LED's. Each of the two driver chips will be coupled for driving of alternate LED's. Thus, one driver chip will drive the odd numbered LED's of the 96 LED's and the other will drive the even numbered LED's of these 96 LED's. The driver chips 40 are electrically connected in parallel to a plurality of lines 34-37 providing various electrical control signals. These lines provide electrical energy for operating the various logic devices and current drivers 49 in accordance with their voltage requirements. A series of lines 36 (indicated by a single line in Fig. 2) provide clock signals and other pulses for controlling the movement of data to the LED's in accordance with known techniques. As may be noted in Figure 2, external to each driver chip 40 is a variable resistor 38 that is schematically illustrated and will be described in greater detail below. A data line 33 is also provided for providing data signals in the form of either a high or low logic level. The driver chips each include a data in and data out port so that they serially pass data between them.

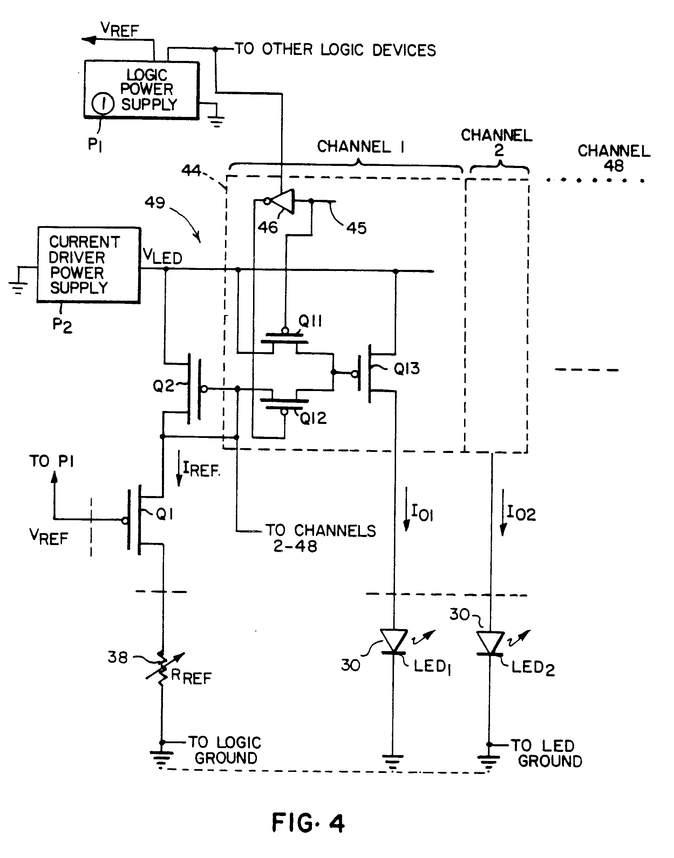

With reference now to FIG. 3, the architecture for each driver chip 40 includes a 48 bit bidirectional shift register 41. A logic signal carried over line R/LB determines the direction data will flow down this register. Assume that this chip is enabled to cause data to flow down the register from left to right as shown in FIG. 3. Data thus enters shift register 41 over line 33 through the driver chip's data-in port at the left from say the data-out port of a driver chip immediately to the left or from the LCU if the driver chip 40 is the first chip for data to enter. Data exits from this chip at the data-out port to be input to the next adjacent driver chip to the right of driver chip 40. In operation for each line of image to be exposed in the main scanning direction, i.e., transverse to that of movement of the recording medium 11 data from the data source suitably rasterized, in accordance with known techniques, streams serially through the shift registers under control of clock pulses provided by the LCU over line 36a. When 2592 bits of data (1's or 0's) are stored by the shift registers of all of the driver chips, a latch signal is provided over line 36b to latch this data into latch registers 42 so that the shift registers 41 may commence filling with data signals for the next line of exposure. Forty-eight latch registers 42 are provided in each driver chip to receive the data shifted out in parallel fashion from the shift register 41. Each latch register is associated with a particular LED and adjacent latch registers are associated with every other LED. A logic AND gate 43 is associated with each latch register and has one input coupled to the output of its respective latch register and its other input coupled to a line 36c for providing a strobe or timing pulse from the LCU. This strobe pulse determines when to trigger the LED's to turn on in relation to the position of the recording medium and the duration for which the LED's are turned on. All the AND gates have one of their inputs connected to this strobe line. The output of each of the AND gates is coupled to a logic or switching circuit that is part of a constant current driver circuit 44.

With reference now to FIG. 4, the output of each AND gate is fed over line 45 to a logic circuit that includes a logic inverter and three p-channel enhancement mode MOSFET's (metal-oxide semiconductor field-effect transistors) Q11, Q12, and Q13. Transistor Q11 has its gate terminal connected to the input of the inverter and its drain-source current conducting channel connected to the line labeled V_{LED} carrying a voltage of, say, 4.5 volts. Current conducting channels of transistors Q11 and Q12 are both connected to the gate terminal of transistor Q13. The output of the inverter 46 is connected to the gate terminal of transistor Q12. The current conducting channel of transistor Q12 is connected to the gate of a similar type transistor Q2. Transistor Q2 has its current conducting channel coupled to the line V_{LED}. A terminal of transistor Q2 is coupled to one terminal of the current conducting channel of an n-channel enhancement mode transistor Q1. The gate terminal of Q2 is also connected to the connection between transistors Q2 and Q1. A variable voltage source V_{REF} is coupled to the gate terminal of transistor Q1 and the current conducting channel of transistor Q1 is coupled to ground through the variable resistor R_{REF}, previously described. The circuit described comprises a current mirror in that current I_{REF}, through a master circuit that includes the line carrying V_{LED}, transistor Q2, transistor Q1 and R_{REF} to ground, is mirrored or proportionally maintained in each of the identical slave circuits, one of which shown comprises the line carrying V_{LED}, transistor Q13, an LED, and ground.

The operation of this current mirror will now be described. It will be appreciated that each slave circuit forming a part of this current driver circuit 49 will behave in the same manner, assuming a same logic signal is provided. With a "high" logic level signal provided by the AND gate 43 to the input of inverter 46, the output of the inverter is such as to render transistor Q12 conductive and causes current I₀₁ to flow through LED₁ by rendering transistor Q13 conductive. Current I₀₁ is proportional to current I_{REF} flowing through the master circuit due to transistors Q2 and Q13 having approximately the same biasing potentials. Transistor Q1 controls the level of I_{REF} in accordance with the input voltage V_{REF} at its gate terminal. The level of current I_{REF} is also controlled by the value of the resistor R_{REF} that is in series with transistors Q2 and Q1. As noted above, the output of the inverter 46 goes to a "low" logic level due to the concurrence of a logic "high" input signal on the AND gate's 43 data terminal and a logic "high" strobe or trigger pulse signal on its other input terminal. When the strobe pulse drops down to a logic "low" level, the output of AND gate 43 goes "low" and the output of inverter 46 goes to a logic "high" level and turns off transistor Q12 and turns on transistor Q11. This removes the needed bias for transistor Q13 to operate and it, too, turns off or ceases to conduct, thereby preventing any current from flowing to LED₁. Thus, the on-time for exposing each pixel on the recording medium is determined by the strobe signal and the amount of current controlling the brightness of this LED is controlled by the level of the current I₀₁.

An important feature of the invention is having R_{REF} be adjustable over a continuous range of resistance values. During calibration of the print head, measurements are taken of the mean or average light output of the forty-eight LED's driven by a respective driver chip and compared with the light output needed or specified for proper exposure of the recording medium. The reference voltage, V_{REF}, may be set at 3.0 volts during this measurement. The reference resistor R_{REF} is of the known laser trimmable type wherein portions may be vaporized off so that while measurements of light output are taken, the resistance is adjusted until the light output measured matches that specified. In resistors of this type, the material vaporised results in reduction of the effective cross-sectional area for the resistor thereby affecting its conductance.

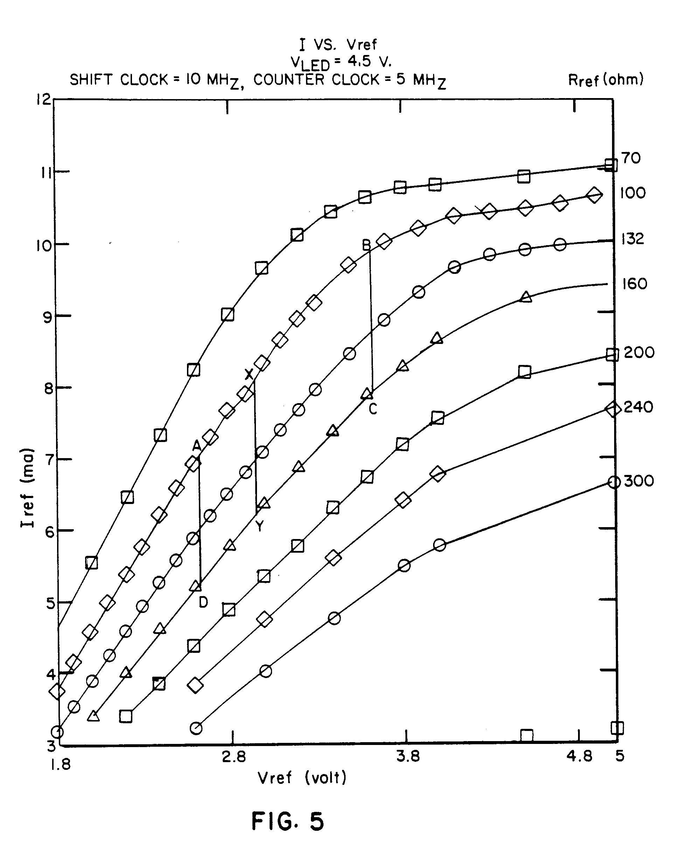

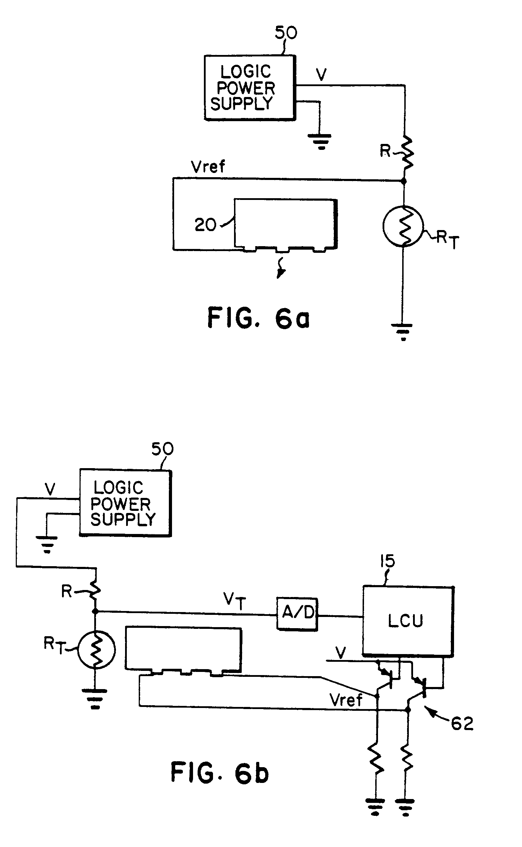

Each of the groups of 48 LED's is calibrated in a similar manner so that their respective resistor R_{REF} is adjusted accordingly. The resistors and driver chips may now be encapsulated to prevent further adjustment. With the print head mounted as shown in FIG. 1, adjustments for variation in light output due to aging and/or environmental conditions will now be described. As shown in FIG. 6a, a logic device power supply 50 outputs a calibrated voltage V. A voltage divider circuit is provided in which one of the resistors, R_{T}, is a positive temperature coefficient thermistor attached to the print head at a location that is reasonably representative of the temperature of the LED's. The LED's used in this print head have decreased light output with elevation in temperature. To compensate for this, the resistance R_{T} will increase, thereby, providing an increase to the reference voltage used to drive transistor Q1. This affects the master current level I_{ref} as shown in FIG. 5. As may be noted in this figure, the preferred operating range for each driver chip 40 is in the range indicated by the somewhat parallelogram-shaped figure having the vertices A, B, C and D. In one embodiment of a print head, values of R_{REF} might range from 100 to 160 ohms. V_{LED} can be maintained constant at 4.5 volts. V_{REF} could be thus adjusted over the range from 2.6 volts to 3.6 volts. It will be noted that providing the type of operating range as shown in FIG. 5 has important advantages in making adjustments to maintain the appropriate level of illumination output by the LED's. In this example, assuming V_{REF} is 2.6 volts, the currents to the various subgroups of LED's will range from 5ma to 7ma or each LED of any subgroup of LED's will receive a current indicated by some point on line AD. Line AD thus represents the locus of points for the currents to the LED's at the selected V_{REF} of 2.6 volts. It will be noted that as V_{REF} increases towards 3.6 volts, the locus, x y, of similar points but for a different V_{REF} shifts upwardly but does not change the relative differentials in current received by the LED's. Thus, LED's in a subgroup having a driver chip with an R_{REF} of 160 ohms might have a current of 5.2 amps for a V_{REF} of 2.6 volts (point D), while another subgroup having a driver chip with an R_{REF} of 100 ohms might have a current of 7.1 ma (point A). The difference in current between a respective LED in each of these subgroups is 1.9ma per LED. With a need for a change of V_{REF} to say 3.0 volts due to a need to compensate for aging or thermal affects upon light outputs by the LED's, the operating parameters of the LED's have shifted generally uniformly both upwardly and to the right on this graph. The new current locus, x y, indicates that the subgroup of LED's formerly operating at point A now has 8.1 ma of current that will pass through each LED of that subgroup while that operating at point D will now have a current of 6.2 ma. The difference in current between respective LED's remains at 1.9 ma. The circuit described thus provides in addition a simplification to calibration since with adjustments of a parameter such as V_{REF} the expected respective currents to the LED's can be readily calculated. This facilitates also the providing of different reference voltages, V_{REF}, for compensating for different "ages" of the LED's. The "age" of an LED may be defined by the number of times it has been used rather than its chronological age.

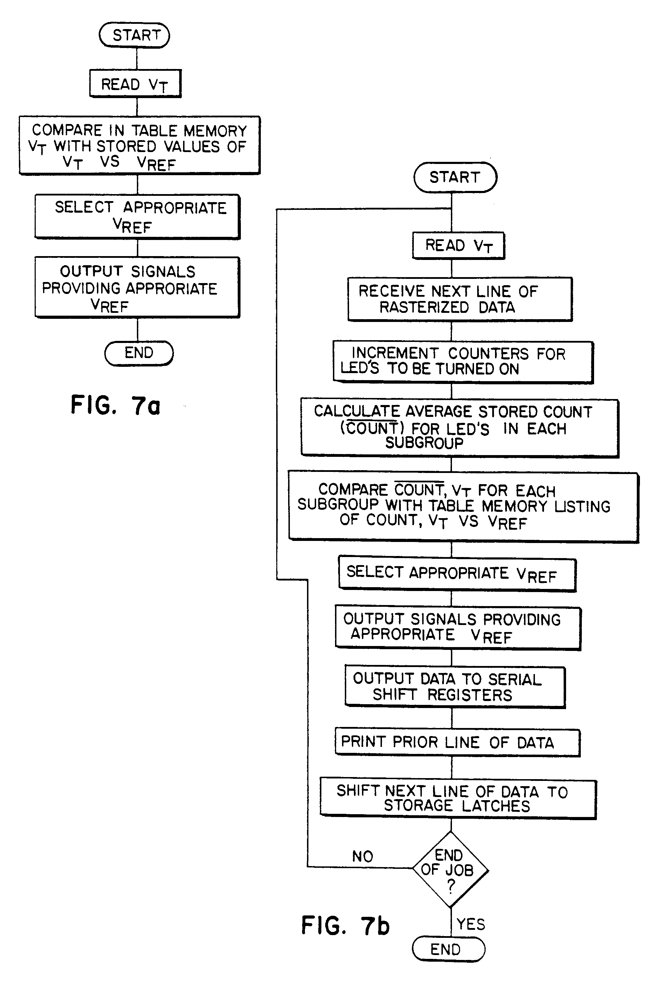

With reference now to FIG 6b, an alternate circuit for adjusting V_{REF} is shown. In this embodiment, changes in resistance of thermistor R_{T} due to temperature changes of the print head 20 cause corresponding changes in voltage V_{T}. The voltage V_{T} is sensed by analog to digital (A/D) converter 60 and fed to the LCU 15. The LCU would include input buffers for temporarily storing inputs from the A/D converter until such inputs can be handled by the LCU's central processor. Associated with the central processor are program memory units and temporary memory units. In the program memory a subroutine program can be provided for determining adjustments to V_{REF} in response to readings of V_{T}. One approach as indicated in the flowchart of Fig. 7a is to have a program which includes a table memory for comparing predetermined stored relationships between V_{T} and V_{REF}. The program will thus compare the sensed value for V_{T} with that in the table and select an appropriate V_{REF}. An output driver 62 then adjusts V_{REF} to each driver chip in accordance with the value stored in memory. Another approach is to provide a mathematical equation between the values of V_{REF} and V_{T} and have the LCU calculate V_{REF}. More than one thermistor may be used in the event there are temperature differences between driver chips so as to provide a thermistor at the most appropriate place for measuring the temperature of a number of driver chips.

In the flowchart of Fig. 7b, age of a driver chip is also accounted for as well as thermal affects. This flowchart will also be described with regard to the circuit of Fig. 6b. As noted above, the LCU 15 controls the flow of data to the shift registers. Since this form of data is in the form of binary digits (1's or 0's) the data for use in enabling an LED for each main scan line may be noted by registers in the LCU and a count maintained of the number of times each LED is enabled. Periodically, a calculation may be made by the LCU to determine the average or mean number (or count) of firings for the LED's of that subgroup driven by a particular driver chip. This average number along with updated sensings of V_{T} may be compared with a table memory listing comparing these variables with appropriate values V_{REF}. A selected appropriate V_{REF} is then outputted by the series of up to 54 drivers 62 to each of the driver chips in accordance with print head temperatures and average age of that subgroup. Thus, for any driver chip the current to the subgroup of LED's driven by that driver chip have their current adjusted in accordance with the temperature of the print head and the average age of the LED's in that subgroup.

As may be noted in the schematic of FIG. 4, two separate power supplies with separate ground or return lines are provided to the print head. One power supply P₁ is used to provide the energy needed to run the logic devices such as inverters 46 (and AND gates, registers and latches etc. shown in FIG. 3). It will be appreciated that an inverter 46 is provided for each of the slave circuits and thus for each LED. The second power supply P₂ is used for providing the electrical energy for powering the current driver circuit; i.e. V_{LED}. As may be noted a variable adjustable tap may be provided at power supply P₁ to allow an operator to adjust V_{REF} as an alternative to automatic adjustment in response to print head temperature. In this way, the large transients or noise created by energization of the LED's during commencement and termination of printing of each line are effectively isolated from the logic devices to thereby immunize them from specious signals. Power consumption is also minimized by running the various devices at their optimum levels. Thus, the LED's may have their driver voltage V_{LED} made lower than the 5 volts used to drive the logic devices.

While the invention has been described with regard to LED's, other emitters known in the art may also be employed.

The printer apparatus thus described provides for improved control of current to the radiation emitters, thereby ensuring improved reproduction of pictorial information. There is also facilitated the ability to provide equal changes of the electrical currents to the various emitters should such change be necessary.

## Claims

1. A printer apparatus (20) including a series of point-like radiation sources (30) arranged in a row for exposing a radiation sensitive recording medium (16); means (41, 42) providing data signals representing data to be printed; logic means (43) responsive to the data signals for determining which of the point-like radiation sources are to be selected for energization; current driver means (49) responsive to the logic means (43) for providing electrical current to the radiation sources (30) selected for energization, the current driver means (49) including a current mirror circuit means including a master circuit (Q2, Q1, 38) for generating a reference current (I_{ref}) and a plurality of slave circuits (Q13, 30) for providing respective driver currents to the radiation sources selected for energization, each driver current (I₀₁, I₀₂...) being proportional to the reference current (I_{ref}) in the master circuit; the master circuit further including a variable voltage source (P1) for adjusting the levels of driver currents and
characterized by the master circuit including an adjustable resistance means (38) of the type that at least prior to adjustment permits driver currents to be adjusted over a range of current values, and automatic adjustment means (15) for sensing a parameter associated with the operating characteristics of the radiation sources and in response to a change in said parameter providing adjustment in said driver currents by changing the output voltage of the variable voltage source (P1).

2. The apparatus of Claim 1 and wherein the automatic adjustment means includes means for sensing the temperature of the apparatus.

3. The apparatus of Claim 1 and wherein the variable voltage source (P1) provides a voltage level that is different than that providing power to the logic means.

4. The apparatus of Claims 1, 2 or 3 and wherein the apparatus includes a support; and wherein a group of point-like radiation sources are arranged on a chip (31); groups of chips are mounted on the support with the point-like radiation sources aligned in a single line; and wherein a respective different current driver is coupled to a sub-group of point-like radiation sources on each chip.

5. The apparatus of Claim 4 and wherein the sub-group comprises every other point-like radiation source.

6. The apparatus of Claims 1, 2, 3, 4, or 5 and wherein the adjustable resistance means (38) is a resistor which is laser trimmed to adjust its conductance.

7. A printer apparatus including a series of point-like radiation sources (30) arranged in a row for exposing a radiation-sensitive recording medium (16), the series of point-like radiation sources being arranged into a plurality of sub-groups; means (41, 42) providing data signals representing data to be printed; logic means (43) responsive to the data signals for determining which of the point-like radiation sources are to be selected for energization; current driver means (49) responsive to the logic means (43) for providing electrical current to the radiation sources selected for energization; the current driver means (49) including for each sub-group of radiation sources a current mirror circuit means including a master circuit (Q2, Q1, 38) for generating a reference current (I_{ref}) and a plurality of slave circuits (Q13, 30) for providing respective driver currents to the radiation sources selected for energization, each driver current (I₀₁, I₀₂...) being proportional to the reference current (I_{ref}) in the master circuit; the master circuit for each sub-group including a respective voltage responsive reference current-controlling circuit (Q1) for controlling the reference current; means for coupling the respective voltage responsive reference current-controlling circuits to a common reference voltage source (P1) that is adjustable for adjusting the levels of driver currents;
characterized by an adjustable resistance means (38) that upon adjustment of a conductance parameter value establishes a respective reference current in the master circuit, the respective conductance parameter values for at least two of said sub-groups being different to establish different respective reference current levels in their respective master circuits; and automatic adjustment means (15) for sensing a second parameter associated with the operating characteristics of the radiation sources and in response to a change in said second parameter providing adjustment in said driver currents by changing the voltage of the common reference voltage source (P1).

8. The apparatus of Claim 7 and wherein the automatic adjustment means (15) includes means for sensing a temperature on the apparatus.

9. The apparatus of Claim 7 and wherein the reference voltage source (P1) provides a voltage level that is different than that providing power to the logic means.

10. The apparatus of Claims 1, 2 or 7 and wherein the apparatus includes a support; and wherein a group of point-like radiation sources are arranged on a chip (31); groups of chips are mounted on the support with the point-like radiation sources aligned in a single line; and wherein at least two sub-groups of point-like radiation sources are on each chip and a sub-group on a chip comprises every other point-like radiation source.

11. The apparatus of Claims 1, 2 or 7 and wherein the point-like radiation sources (30) are light-emitting diodes.

12. The apparatus of Claim 7 and wherein the voltage responsive reference current controlling circuit (Q1) is a transistor, a gate terminal of the transistor is coupled to the common reference voltage source (P1); and the current driver means (49) is attached to a current driver power supply (P2) for generating the reference current through said transistor (Q1) and said adjustable resistance means (38).

13. The apparatus of Claim 12 and wherein said transistor (Q1) is a field effect transistor.

14. The apparatus of Claims 7, 12 or 13 and wherein each slave circuit includes a driver transistor (Q13) for conducting driver current to a respective radiation source (30) and said logic means includes first (Q12) and second (Q11) transistors that have respective first terminals commonly connected to a control terminal of the driver transistor (Q13) and have second terminals connected to respective different first and second levels of voltage, and inverter means (46) for simultaneously providing digital logic level signals of different digital values to respective control terminals of said first and second transistors to selectively switch said first and second transistors to selectively apply one or the other of said first and second levels of voltage to the control terminal of the driver transistor (Q13) to bias said driver transistor to a current-conducting state or a current non-conducting state in accordance with the digital signals from said inverter means (46).

## Patentansprüche

1. Drucker (20) mit mehreren in einer Zeile angeordneten punktförmigen Strahlungsquellen (30) zum Belichten eines strahlungsempfindlichen Aufzeichnungsmediums (16), mit Mitteln (41, 42), welche zu druckende Daten darstellende Datensignale liefern, einer auf die Datensignale ansprechenden Logik (43), die bestimmt, welche der punktförmigen Strahlungsquellen für die Energiezufuhr ausgewählt werden sollen, auf die Logik (43) ansprechende Stromtreibermittel (49) zur Beaufschlagung der für die Energiezufuhr ausgewählten Strahlungsquellen (30) mit elektrischer Energie, wobei die Stromtreibermittel (49) eine Stromspiegelschaltung aufweisen, die einen Hauptschaltkreis (Q2, Q1, 38) zum Erzeugen eines Referenzstroms (I_{ref}) und mehrere Nebenschaltkreise (Q13, 30) zu Beaufschlagung der für die Energiezufuhr ausgewählten Strahlungsquellen mit dem entsprechenden Treiberstrom angemessener Größe aufweist, und wobei jeder Treiberstrom (I₀₁, I₀₂ ...) proportional zum Referenzstrom des Hauptschaltkreises ist, der auch eine variable Spannungsquelle (P1) zum Angleichen der Treiberstromgrößen umfaßt, dadurch gekennzeichnet, daß der Hauptschaltkreis einstellbare Widerstände (38) aufweist, die es zumindest vor einer Einstellung ermöglichen, die Treiberströme innerhalb eines Stromgrößenbereichs einander anzugleichen, sowie automatische Regelungsmittel (15) zur Erfassung von den Betriebsdaten der Strahlungsquellen zugeordneten Parametern und zur Angleichung der Treiberströme durch Verändern der Ausgangsspannung der variablen Spannungsquelle (P1) in Abhängigkeit von einer Veränderung der Parameter.

2. Drucker nach Anspruch 1, dadurch gekennzeichnet, daß die Regelungsmittel (15) Mittel zur Ermittlung der Gerätetemperatur aufweisen.

3. Drucker nach Anspruch 1, dadurch gekennzeichnet, daß die variable Spannungsquelle (P1) eine Spannung liefert, die sich von der die Logik versorgenden Spannung unterscheidet.

4. Drucker nach Anspruch 1, 2 oder 3, gekennzeichnet durch eine Halterung, eine auf einem Chip (31) angeordnete Gruppe von punktförmigen Strahlungsquellen und auf der Halterung angebrachte Chipgruppen, wobei die punktförmigen Strahlungsquellen in einer einzigen Zeile angeordnet und die Stromtreiber auf jedem der Chips mit einer Untergruppe von punktförmigen Strahlungsquellen verbunden sind.

5. Drucker nach Anspruch 4, dadurch gekennzeichnet, daß die Untergruppe jede zweite der punktförmigen Strahlungsquellen umfaßt.

6. Drucker nach Anspruch 1, 2, 3, 4 oder 5, dadurch gekennzeichnet, daß die einstellbaren Widerstände (38) durch Laserabtragung abgeglichene Widerstände sind.

7. Drucker mit mehreren in einer Zeile angeordneten punktförmigen Strahlungsquellen (30) zum Belichten eines strahlungsempfindlichen Aufzeichnungsmediums (16), wobei die punktförmigen Strahlungsquellen in mehreren Untergruppen angeordnet sind, mit Mitteln (41, 42), welche zu druckende Daten darstellende Datensignale liefern, einer auf die Datensignale ansprechenden Logik (43), die bestimmt, welche der punktförmigen Strahlungsquellen für eine Energiezufuhr ausgewählt werden sollen, auf die Logik (43) ansprechende Stromtreibermittel (49) zur Beaufschlagung der für die Energiezufuhr ausgewählten Strahlungsquellen (30) mit elektrischer Energie, wobei die Stromtreibermittel (49) für jede Untergruppe der Strahlungsquellen eine Stromspiegelschaltung aufweisen, die einen Hauptschaltkreis (Q2, Q1, 38) zum Erzeugen eines Referenzstroms (I_{ref}) und mehrere Nebenschaltkreise (Q13, 30) zur Beaufschlagung der für die Energiezufuhr ausgewählten Strahlungsquellen mit Treiberstrom angemessener Größe aufweist, und wobei jeder Treiberstrom (I₀₁, I₀₂ ...) proportional zum Referenzstrom des Hauptschaltkreises ist und der Hauptschaltkreis für jede Untergruppe eine spannungsabhängige Referenzstrom-Steuerschaltung (Q1) aufweist, und mit Mitteln zum Verbinden dieser Referenzstrom-Steuerschaltungen mit einer gemeinsamen, zur Angleichung der Treiberstromgrößen einstellbaren Referenzspannungsquelle (P1), gekennzeichnet durch einstellbare Widerstände (38), die nach Einstellen eines bestimmten Widerstandwerts einen entsprechenden Referenzstrom im Hauptschaltkreis erzeugen, wobei die jeweiligen Widerstandswerte für mindestens zwei der Untergruppen unterschiedlich sind und in ihren Hauptschaltkreisen jeweils unterschiedliche Referenzströme erzeugen, und durch Regelungsmittel (15) zur Erfassung eines den Betriebsdaten der Strahlungsquellen zugeordneten zweiten Parameters, die in Abhängigkeit von einer Veränderung des zweiten Parameters die Treiberströme durch Spannungsänderung der gemeinsamen Referenzspannungsquelle (P1) angleichen.

8. Drucker nach Anspruch 7, dadurch gekennzeichnet, daß die Regelungsmittel (15) Mittel zur Ermittlung der Gerätetemperatur aufweisen.

9. Drucker nach Anspruch 7, dadurch gekennzeichnet, daß die Referenzspannungsquelle (P1) eine Spannung erzeugt, die sich von der die Logik versorgenden Spannung unterscheidet.

10. Drucker nach Anspruch 1, 2 oder 7, gekennzeichnet durch eine Halterung, eine auf einem Chip (31) angeordnete Gruppe von punktförmigen Strahlungsquellen und auf der Halterung angebrachte Chipgruppen, wobei die punktförmigen Strahlungsquellen in einer einzigen Zeile und mindestens jeweils zwei aus punktförmigen Strahlungsquellen gebildete Untergruppen auf jedem der Chips angeordnet sind, wobei jede Untergruppe jeweils jede zweite Strahlungsquelle umfaßt.

11. Drucker nach Anspruch 1, 2 oder 7, dadurch gekennzeichnet, daß die punktförmigen Strahlungsquellen (30) Leuchtdioden sind.

12. Drucker nach Anspruch 7, dadurch gekennzeichnet, daß die spannungsabhängige Referenzstrom-Steuerschaltung (Q1) ein mit seinem Gate-Anschluß mit der gemeinsamen Referenzspannungsquelle (P1) verbundener Transistor ist, und daß die Stromtreibermittel (49) mit einer Stromtreiber-Energiequelle (P2) verbunden sind, um den Referenzstrom durch den Transistor (Q1) und den einstellbaren Widerstand (38) zu erzeugen.

13. Drucker nach Anspruch 12, dadurch gekennzeichnet, daß der Transistor (Q1) ein Feldeffekttransistor ist.

14. Drucker nach Anspruch 7, 12 oder 13, dadurch gekennzeichnet, daß jeder Nebenschaltkreis einen Treibertransistor (Q13) aufweist, der Treiberstrom an eine entsprechende Strahlungsquelle (30) leitet, daß die Logik einen ersten (Q12) und einen zweiten (Q11) Transistor aufweist, deren erster Anschluß jeweils mit einem gemeinsamen Steueranschluß des Treibertransistors (Q13) und deren zweiter Anschluß jeweils an unterschiedlich hohen ersten und zweiten Spannungspegeln liegt und daß invertierende Mittel (46) vorgesehen sind, die gleichzeitig digitale Logikpegelsignale unterschiedlicher Digitalwerte an die jeweiligen Steueranschlüsse des ersten und zweiten Transistors abgeben, um sie derart zu steuern, daß entweder der eine oder der andere Spannungspegel an dem Steueranschluß des Treibertransistors (Q13) anliegt, damit der Treibertransistor je nach den vom Inverter (46) abgegebenen Digitalsignalen in einen leitenden oder nicht leitenden Zustand gelangt.

## Revendications

1. Appareil d'impression (20) comportant une série de sources de rayonnement du type ponctuel (30) disposées en une rangée afin d'exposer un support d'enregistrement (16) sensible au rayonnement ; des moyens (41,42) produisant des signaux de données qui représentent des données à imprimer ; des moyens logiques (43) qui répondent aux signaux de données en déterminant quelles sources de rayonnement du type ponctuel doivent être sélectionnées en vue de leur excitation ; des moyens (49) de commande de courant qui répondent aux moyens logiques (43) en fournissant un courant électrique aux sources de rayonnement (30) sélectionnées en vue de leur excitation, les moyens de commande de courant (49) comportant un moyen du type circuit miroir de courant qui comporte un circuit principal (Q2, Q1, 38) servant à produire un courant de référence (I_{ref}) et plusieurs circuits asservis (Q13, 30) servant à fournir des courants de commande respectifs aux sources de rayonnement sélectionnées en vue de leur excitation, chaque courant de commande (I₀₁, I₀₂...) étant proportionnel au courant de référence (I_{ref}) du circuit principal ; le circuit principal comportant en outre une source de tension variable (P1) servant à ajuster les niveaux des courants de commande, et
caractérisé en ce que le circuit principal comporte un moyen à valeur de résistance ajustable (38) du type qui, au moins avant l'ajustement, permet d'ajuster les courants de commande sur un certain intervalle d'intensités de courant, et un moyen d'ajustement automatique (15) servant à déterminer un paramètre associé aux caractéristiques de fonctionnement des sources de rayonnement et à produire, en réponse à une variation dudit paramètre, un ajustement desdits courants de commande en modifiant la tension de sortie de la source de tension variable (P1).

2. Appareil selon la revendication 1, où le moyen d'ajustement automatique comporte un moyen servant à déterminer la température de l'appareil.

3. Appareil selon la revendication 1, où la source de tension variable (P1) produit un niveau de tension qui est différent de celui assurant l'alimentation électrique des moyens logiques.

4. Appareil selon l'une quelconque des revendications 1, 2 et 3, où l'appareil comporte un support ; où un groupe de sources de rayonnement du type ponctuel sont disposées sur une puce (31); des groupes de puces sont montés sur le support de façon que les sources de rayonnement du type ponctuel soient alignées sur une seule ligne ; et où un moyen de commande de courant respectivement différent est connecté à un sous-groupe de sources de rayonnement du type ponctuel sur chaque puce.

5. Appareil selon la revendication 4, où le sous-groupe comprend une sur deux des sources de rayonnement du type ponctuel.

6. Appareil selon l'une quelconque des revendications 1, 2, 3, 4 et 5, où le moyen à valeur de résistance ajustable (38) est une résistance que l'on soumet à un ajustage par laser pour ajuster sa valeur de conductance.

7. Appareil d'impression comportant une série de sources de rayonnement du type ponctuel (30) disposées en une rangée afin d'exposer un support d'enregistrement (16) sensible au rayonnement, la série de sources de rayonnement du type ponctuel étant disposée en une pluralité de sous-groupes ; des moyens (41, 42) produisant des signaux de données qui représentent des données à imprimer; des moyens logiques (43) qui répondent aux signaux de données en déterminant quelles sources de rayonnement du type ponctuel doivent être sélectionnées en vue de leur excitation ; des moyens de commande de courant (49) qui répondent aux moyens logiques (43) en fournissant un courant électrique aux sources de rayonnement sélectionnées en vue de leur excitation ; les moyens de commande de courant (49) comportant, pour chaque sous-groupe de sources de rayonnement, un moyen du type circuit miroir de courant qui comporte un circuit principal (Q2, Q1, 38) servant à produire un courant de référence (I_{ref}) et une pluralité de circuits asservis (Q13, 30) servant à fournir des courants de commande respectifs aux sources de rayonnement sélectionnées en vue de leur excitation, chaque courant de commande (I₀₁,I₀₂...) étant proportionnel au courant de référence (I_{ref}) du circuit principal ; le circuit principal comportant, pour chaque sous-groupe, un circuit respectif (Q1) de commande de courant de référence sensible à la tension, qui sert à commander le courant de référence ; des moyens servant à connecter les circuits respectifs de commande de courant de référence sensibles à la tension à une source de tension de référence commune (P1) que l'on peut ajuster pour ajuster les niveaux des courants de commande;
caractérisé par un moyen à valeur de résistance ajustable (38) qui, lors de l'ajustement de la valeur d'un paramètre de conductance, établit un courant de référence respectif dans le circuit principal, les valeurs respectives des paramètres de conductance qui se rapportent à au moins deux desdits sous-groupes étant différentes afin d'établir des niveaux de courant de référence respectifs différents dans leurs circuits principaux respectifs ; et un moyen d'ajustement automatique (15) servant à détecter un deuxième paramètre associé aux caractéristiques de fonctionnement des sources de rayonnement et à produire, en réponse à une variation dudit deuxième paramètre, un ajustement desdits courants de commande en modifiant la tension de la source de tension de référence commune (P1).

8. Appareil selon la revendication 7, où le moyen d'ajustement automatique (15) comporte un moyen servant à détecter la température sur l'appareil.

9. Appareil selon la revendication 7, où la source de tension de référence (P1) produit un niveau de tension qui est différent de celui assurant l'alimentation électrique des moyens logiques.

10. Appareil selon l'une quelconque des revendications 1, 2 et 7, où l'appareil comporte un support ; où un groupe de sources de rayonnement du type ponctuel sont disposées sur une puce (31); des groupes de puces sont montés sur le support de façon que les sources de rayonnement du type ponctuel soient alignées sur une seule ligne ; et où au moins deux sous-groupes de sources de rayonnement du type ponctuel se trouvent sur chaque puce, et un sous-groupe d'une puce comprend une sur deux des sources de rayonnement du type ponctuel.

11. Appareil selon l'une quelconque des revendications 1, 2 et 7, où les sources de rayonnement du type ponctuel (30) sont des diodes d'émission de lumière.

12. Appareil selon la revendication 7, où le circuit (Q1) de commande de courant de référence sensible à la tension est un transistor, la borne de grille de ce transistor étant connectée à la source de tension de référence commune (P1) ; et le moyen de commande de courant (49) est fixé à une alimentation électrique de commande de courant (P2) afin de produire le courant de référence via ledit transistor (Q1) et ledit moyen à valeur de résistance ajustable (38).

13. Appareil selon la revendication 12, où ledit transistor (Q1) est un transistor à effet de champ.

14. Appareil selon l'une quelconque des revendications 7, 12 et 13, où chaque circuit asservi comporte un transistor de commande (Q13) servant à conduire un courant de commande à une source de rayonnement respective (30), et ledit moyen logique comporte des premier et deuxième transistors (Q12, Q11) qui possèdent des premières bornes respectives connectées en commun à une borne de commande du transistor de commande (Q13) et des deuxièmes bornes connectées à des premier et deuxième niveaux de tension respectifs différents, et un moyen inverseur (46) servant à fournir simultanément des signaux de niveaux logiques numériques ayant des valeurs numériques différentes à des bornes de commande respectives desdits premier et deuxième transistors afin de faire sélectivement commuter lesdits premier et deuxième transistors pour sélectivement appliquer l'un ou l'autre desdits premier et deuxième niveaux de tension à la borne de commande du transistor de commande (Q13) et, ainsi, polariser ledit transistor de commande dans un état de conduction de courant ou un état de non-conduction de courant en fonction des signaux numériques venant dudit moyen inverseur (46).
